# FASCICULE DE BREVET EUROPEEN

(11) **EP 1 807 615 B1**
(45) Date de publication et mention de la délivrance du brevet: **13.02.2008**
(21) Numéro de dépôt: 05816133.2
(22) Date de dépôt: 20.10.2005
(51) Int. Cl.: F01N 11/00

(54) **PROCEDE ET DISPOSITIF POUR L'ESTIMATION DE LA TEMPERATURE DES GAZ D'ECHAPPEMENT ENTRANT DANS UN SYSTEME DE POST-TRAITEMENT PLACE EN AVAL D'UN SYSTEME DE TRAITEMENT DE CES GAZ**
VERFAHREN UND VORRICHTUNG ZUR SCHÄTZUNG DER TEMPERATUR VON ABGASEN BEIM EINTRITT IN EIN NACHBEHANDLUNGSSYSTEM, DAS EINEM SYSTEM ZUR BEHANDLUNG DIESER GASE NACHGESCHALTET IST
METHOD AND DEVICE FOR ESTIMATING THE TEMPERATURE OF EXHAUST GASES ENTERING INTO A POST-TREATMENT SYSTEM ARRANGED DOWNSTREAM FROM A SYSTEM FOR THE TREATMENT OF SAID GASES

(30) Priorité: 27.10.2004 FR 0452456
(43) Date de publication de la demande: 18.07.2007
(73) Titulaire: RENAULT S.A.S., 92100 Boulogne Billancourt (FR)
(72) Inventeur: POILANE, Emmanuel, F-91290 LA NORVILLE (FR); BARRILLON, Pascal, F-92130 ISSY LES MOULINEAUX (FR); MEURISSE, Olivier, F-92160 ANTONY (FR); GAUVIN, Fabrice, F-91540 MENNECY (FR)
(86) Numéro de dépôt international: PCT/FR2005/050878
(87) Numéro de publication internationale: WO 2006/045975

(56) Documents cités:
- EP-A- 1 061 241
- DE-A1- 10 036 942
- DE-A1- 19 836 955

## Description

La présente invention concerne un procédé et un dispositif permettant, pour un moteur à combustion interne, de modéliser la température des gaz d'échappement à l'entrée d'un système de post-traitement placé en aval d'un système de traitement desdits gaz d'échappement (par exemple, et de manière non limitative, ledit système de traitement peut être : un catalyseur d'oxydation, un piège à oxydes d'azote NOₓ, ou un catalyseur "4 voies"), permettant ainsi de s'affranchir d'un capteur tout en ayant accès à une information essentielle pour le bon fonctionnement dudit système de post-traitement.

On connaît divers procédés permettant d'estimer la température au sein d'un système de traitement des gaz issus de la combustion interne d'un moteur (par exemple au sein d'un piège à oxydes d'azote NOₓ) et implanté dans la ligne d'échappement dudit moteur, ce paramètre jouant, en effet, un rôle important, tant sur l'efficacité dudit système de traitement que sur le vieillissement de celui-ci, notamment. Ces procédés sont généralement basés sur une mesure de la température des gaz d'échappement au voisinage dudit système de traitement (en amont ou en aval de celui-ci, voire dans certains cas une double mesure, en amont et en aval) à laquelle est couplé un calcul basé sur différents types de modèles.

Le document US 5419122, par exemple, propose ainsi un procédé de détermination de l'état d'un piège catalytique, dans lequel une mesure de la température des gaz d'échappement en amont dudit piège, couplée à la mesure de la température desdits gaz en aval dudit piège, permet le calcul de la quantité de chaleur transférée entre lesdits gaz d'échappement et le catalyseur situé dans ledit piège, la température dudit catalyseur étant ensuite déduite de ladite quantité de chaleur par l'intermédiaire d'un modèle classique de transfert de chaleur par convection au sein dudit catalyseur.

De tels procédés ne rendent toutefois qu'imparfaitement compte des phénomènes survenant lors de régimes transitoires du moteur, et ne prennent que partiellement en compte les phénomènes physico-chimiques intervenant au sein du piège catalytique, voire les ignorent. Or, l'exothermicité des réactions intervenant au sein dudit piège, ainsi que l'inertie thermique dudit piège, ont une influence non négligeable sur l'état thermique dudit piège et sur sa température : de la non prise en compte de ces facteurs peut résulter une estimation peu fiable du paramètre étudié, dans des modèles pour lesquels, par ailleurs, la seule donnée d'entrée est une mesure de température à l'extérieur dudit piège (donc peu représentative de l'état thermique au sein dudit piège).

Le document DE 19836955 présente un procédé de calcul de la température au sein de pièges catalytiques, dans lequel deux systèmes de traitement sont placés en série dans la ligne d'échappement d'un moteur à combustion interne, et dans lequel ladite température est déduite, par une méthode d'intégration, d'un bilan énergétique au sein de chacun desdits systèmes de traitement, prenant en partie en compte une certaine exothermicité en cours de fonctionnement ainsi que l'inertie thermique desdits systèmes.

Ce procédé nécessite toutefois l'implantation de plusieurs capteurs de température sur la ligne d'échappement, et s'avère donc relativement coûteux, lesdits capteurs devant être en outre équipés de connectiques appropriées, ce qui en augmente encore le coût. La précision de mesure desdits capteurs pouvant, de plus, se dégrader avec leur vieillissement thermique et/ou leur encrassement, leur multiplication peut ici conduire à des dérives importantes dans la fiabilité des résultats.

La présente invention a pour but, dans le cas de l'implantation, dans la ligne d'échappement du moteur à combustion interne d'un véhicule, d'un système de post-traitement placé en aval d'un système de traitement des gaz issus de ladite combustion interne, de proposer un modèle pour le calcul de la température desdits gaz d'échappement à l'entrée dudit système de post-traitement, permettant ainsi de s'affranchir de la mise en place d'un capteur supplémentaire dans ladite ligne d'échappement.

L'invention atteint son but grâce à un procédé d'estimation de la température des gaz issus de la combustion interne d'un moteur à l'entrée d'un système de post-traitement desdits gaz, relié par un conduit à un système amont de traitement desdits gaz, et considéré par calcul comme un ensemble de n réacteurs élémentaires (Rᵢ) connectés en série, et dont le nombre total n dépend du volume dudit système de traitement et dont le énième (Rₙ) est le dernier traversé par lesdits gaz avant de sortir dudit système de traitement (10), caractérisé en ce que ladite température (Tₑ) à l'entrée dudit système de post-traitement (12) est calculée à partir de la température (Tₙ) au sein du énième réacteur fictif élémentaire (Rₙ).

Dans un mode de réalisation préféré de l'invention, ladite température à l'entrée dudit système de post-traitement placé en aval dudit système de traitement est calculée à partir de ladite température au sein dudit énième réacteur élémentaire fictif au moyen d'un modèle de convection thermique simple dans un tube.

Alternativement, dans le cas où la distance entre ledit système de post-traitement placé en aval dudit système de traitement et ledit système de traitement est suffisamment faible, ladite température à l'entrée dudit système de post-traitement placé en aval dudit système de traitement est considérée comme étant égale à la température au sein dudit énième réacteur élémentaire fictif.

Avantageusement, l'invention peut présenter l'une ou l'autre des caractéristiques suivantes
- ledit modèle de convection thermique dans un tube prend en compte les paramètres physiques des gaz (masse volumique, capacité calorifique, viscosité dynamique, conductibilité thermique) et les paramètres physiques de la ligne d'échappement entre ledit système de traitement et ledit système de post-traitement placé en aval dudit système de traitement (capacité calorifique du matériau constituant ladite ligne, etc ...) afin de déterminer les échanges convectifs entre les gaz et ladite ligne d'échappement,
- ledit procédé selon l'invention est associé à des moyens de traitement appropriés au sein du calculateur de gestion électronique dudit moteur à combustion interne.

D'autres caractéristiques et avantages de l'invention ressortiront à la lecture de la description qui suit, en référence aux dessins annexés dans lesquels :
- la figure 1 est un schéma simplifié d'un moteur à combustion interne et de sa ligne d'échappement incluant un système de traitement des gaz issus de ladite combustion et un système de post-traitement placé en aval dudit système de traitement,
- la figure 2 est un schéma de principe du procédé selon l'invention.

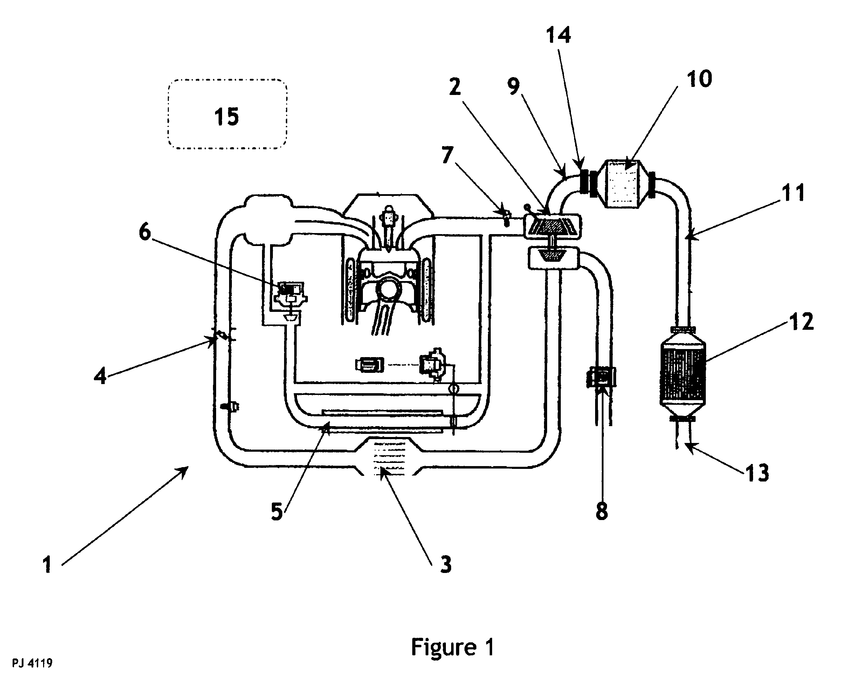

La figure 1 présente un schéma simplifié d'un moteur à combustion interne 1 associé à un turbocompresseur 2 et comportant, de manière classique, un échangeur de suralimentation 3 couplé à des volets d'air 4, ainsi qu'un échangeur EGR 5 couplé à une vanne EGR 6 pour la re-circulation partielle et le refroidissement d'une partie des gaz issus de la combustion. Le turbocompresseur 2 est classiquement associé à une sonde de température 7, ainsi qu'à un débitmètre d'entrée d'air 8. A l'issue de la combustion, les gaz sont acheminés dans un conduit 9 jusqu'à un premier système de traitement 10 (par exemple et de manière non limitative un piège à oxydes d'azote NOₓ, ou un catalyseur d'oxydation, ou un catalyseur "4 voies"), puis, par l'intermédiaire d'un conduit 11 placé en sortie dudit système de traitement 10, jusqu'à un système de post-traitement 12, et enfin, via un dispositif approprié 13, jusqu'à l'échappement du véhicule. Une sonde de température 14 est placée sur le conduit 9, de préférence au plus près de l'entrée dudit système de traitement 10.

L'ensemble est piloté par un calculateur électronique 15, ledit calculateur électronique 15 étant, notamment et de manière non limitative, équipé des moyens de traitement des informations délivrées par les capteurs 7, 8, et 14.

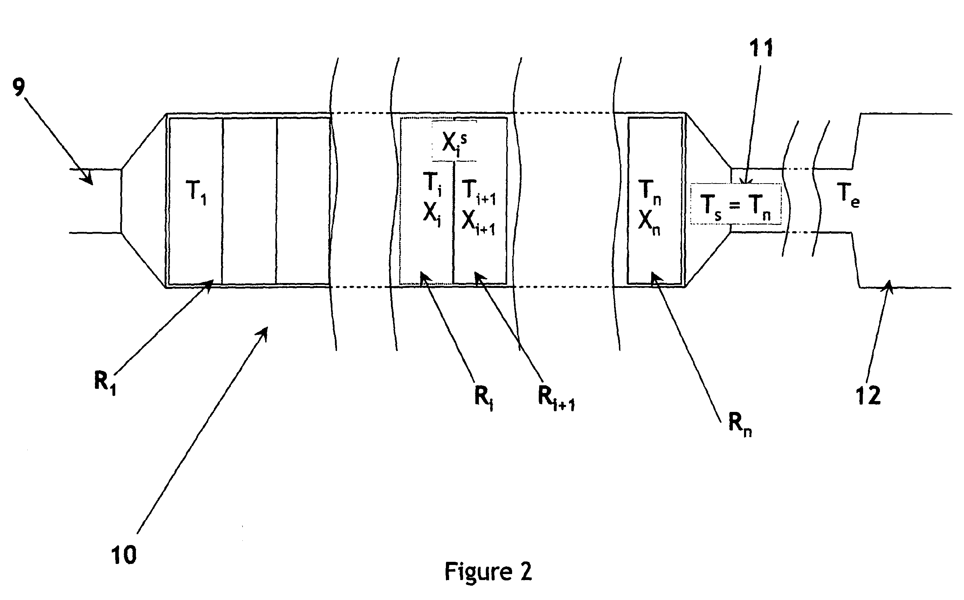

Ainsi que le montre la figure 2, le système de traitement 10 peut être considéré comme l'ensemble de n réacteurs élémentaires fictifs Rᵢ. Lesdits n réacteurs élémentaires fictifs Rᵢ sont connectés en série et parfaitement agités, de telle manière que toutes les variables du système sont constantes au sein de chacun desdits n réacteurs élémentaires fictifs Rᵢ : ainsi la valeur Xᵢ^{s} de la variable X à la sortie du réacteur élémentaire fictif Rᵢ est égale à la valeur Xᵢ de ladite variable X au sein dudit réacteur élémentaire fictif Rᵢ. A titre d'exemple et de manière non limitative, les variables de fonctionnement considérées peuvent être : la température, les concentrations des différents produits du mélange gazeux traité au sein dudit système de traitement 10, les propriétés physico-chimiques dudit mélange (viscosité, capacité calorifique ...), ainsi que les propriétés physiques des éléments constituant ledit système 10 (conductibilité thermique des matériaux ...).

Lesdits n réacteurs élémentaires fictifs Rᵢ sont numérotés de 1 à n dans le sens de l'écoulement des gaz le long dudit système de traitement 10 : le réacteur élémentaire Rₙ est ainsi celui qui correspond à la sortie des gaz dudit système de traitement 10.

Pour chaque réacteur élémentaire fictif Rᵢ, les systèmes d'équations des bilans massique, thermique, et énergétique sont résolus en prenant en compte la cinétique chimique intervenant pour le mélange gazeux traversant ledit réacteur élémentaire fictif Rᵢ ainsi que pour les éléments constituant ledit réacteur élémentaire fictif Rᵢ. Les résultats obtenus pour ledit réacteur élémentaire fictif Rᵢ sont pris comme valeurs d'entrée pour le réacteur élémentaire fictif Rᵢ₊₁ suivant, de sorte que l'on obtient ainsi, de proche en proche, un profil longitudinal des grandeurs considérées le long du système 10.

Les valeurs initiales des grandeurs considérées sont déterminées à partir, par exemple et de manière non limitative, par l'information fournie par le capteur 14, ou par des tables ou abaques établies sur la base d'hypothèses réalisées quant à la composition du mélange gazeux, notamment.

Le nombre total n de réacteurs élémentaires fictifs Rᵢ constituant le système 10 est défini en fonction du volume dudit système 10, de la précision souhaitée pour les résultats obtenus, et de manière à ne pas entraîner une charge de calcul trop importante pour le calculateur chargé de réaliser les opérations.

Ainsi qu'il a été mentionné précédemment, chacun des n réacteurs élémentaires fictifs Rᵢ a la propriété remarquable que les variables du système y sont constantes : il en résulte en particulier que la valeur, par exemple, de la température au sein du dernier réacteur élémentaire fictif Rₙ, soit Tₙ, est donc égale à la valeur de ladite température à la sortie dudit réacteur élémentaire fictif Rₙ, c'est-à-dire à la sortie dudit système de traitement 10, soit Tₛ.

Dans le cas où la longueur du conduit 11 placé entre ledit système de traitement 10 et ledit système de post-traitement 12 est minimale, on peut, dans le procédé selon l'invention, négliger les phénomènes thermiques intervenant dans ledit conduit 11 : il en résulte alors que la valeur Tₑ de la température des gaz à l'entrée dans ledit système de post-traitement 12 est égale à la valeur Tₛ de ladite température à la sortie dudit système de traitement 10, et donc à la température Tₙ calculée au sein du réacteur élémentaire fictif Rₙ, les températures Tₙ et Tₛ étant identiques ainsi qu'il a été mentionné précédemment.

Dans le cas où la longueur dudit conduit 11 placé entre ledit système de traitement 10 et ledit système de post-traitement 12 est trop importante pour que l'on puisse négliger les phénomènes thermiques y survenant, ladite température Tₑ est calculée, par le procédé selon l'invention, au moyen d'un modèle simplifié de convection thermique dans un tube, la température Tₛ (soit Tₙ) à la sortie du système de traitement 10 étant prise comme valeur d'entrée dudit modèle simplifié de convection thermique dans un tube. La connaissance de la valeur de Tₛ (soit Tₙ) permet d'accéder aux paramètres physiques des gaz traversant ledit conduit 11 (tels que, par exemple et de manière non limitative : masse volumique, capacité calorifique, viscosité dynamique, conductibilité thermique), ainsi qu'aux grandeurs caractéristiques dudit conduit 11 (conductibilité thermique, par exemple). Il devient ainsi possible de déterminer les coefficients d'échanges convectifs entre lesdits gaz et ledit conduit 11, et, par là, de calculer lesdits échanges afin d'estimer la température Tₑ desdits gaz à l'entrée dudit système 12 de post-traitement.

Le procédé selon l'invention permet ainsi de s'affranchir de la mise en place, sur ledit conduit 11 placé entre ledit système de traitement 10 et ledit système de post-traitement 12, d'un capteur supplémentaire, qui entraînerait, outre son propre coût, le coût de la connectique associée et de l'implémentation des moyens de traitements du signal délivré par ledit capteur au sein du calculateur électronique chargé de réaliser les calculs.

Dans un mode de réalisation complémentaire de la présente invention, le procédé selon l'invention décrit ci-dessus est associé aux moyens nécessaires à sa mise en place, et, notamment, à son implémentation au sein dudit calculateur électronique 15, permettant ainsi une gestion et un contrôle simplifiés et en temps réel des performances et du vieillissement des systèmes de traitement des gaz issus de la combustion interne du moteur considéré.

## Revendications

1. Procédé d'estimation de la température (Tₑ) des gaz issus de la combustion interne d'un moteur (1) à l'entrée d'un système (12) de post-traitement desdits gaz, relié par un conduit (11) à un système amont (10) de traitement desdits gaz, et considéré par calcul comme un ensemble de n réacteurs élémentaires (Rᵢ) connectés en série, dont le nombre total n dépend du volume dudit système de traitement (10) et dont le énième (Rₙ) est le dernier traversé par lesdits gaz avant de sortir dudit système de traitement (10), **caractérisé en ce que** ladite température (Tₑ) à l'entrée dudit système de post-traitement (12) est calculée à partir de la température (Tₙ) au sein du énième réacteur fictif élémentaire (Rₙ).

2. Procédé selon la revendication 1, **caractérisé en ce que** ladite température (Tₑ) à l'entrée dudit système de post-traitement (12) est calculée à partir de ladite température (Tₙ) au sein dudit énième réacteur élémentaire (Rₙ) au moyen d'un modèle de convection thermique simple dans un tube.

3. Procédé selon l'une quelconque des revendications 1 ou 2, **caractérisé en ce que** les paramètres physiques desdits gaz (masse volumique, capacité calorifique, viscosité dynamique, conductibilité thermique ...) et les paramètres physiques dudit conduit (11) sont estimés à partir de ladite température (Tₙ) afin de déterminer les échanges convectifs entre lesdits gaz et ledit conduit (11).

4. Procédé selon l'une quelconque des revendications 1 à 3, **caractérisé en ce que**, lorsque la longueur dudit conduit (11) est suffisamment faible, ladite température (Tₑ) est considérée comme étant égale à ladite température (Tₙ).

5. Dispositif d'estimation de la température (Tₑ) des gaz issus de la combustion interne d'un moteur (1) à l'entrée d'un système de post-traitement (12) desdits gaz placé en aval d'un système de traitement (10) desdits gaz, ledit système de post-traitement (12) étant relié audit système de traitement (10) au moyen d'un conduit (11), **caractérisé en ce qu'**il comprend les moyens de traitement aptes à l'application du procédé selon l'une quelconque des revendications 1 à 4.

6. Dispositif selon la revendication 5, **caractérisé en ce qu'**il est embarqué sur le véhicule dont la température (Tₑ) des gaz issus de la combustion interne du moteur (1) et dudit système de traitement (10) est recherchée.

7. Dispositif selon l'une quelconque des revendications 5 ou 6, **caractérisé en ce qu'**il est associé au calculateur électronique (15) de gestion dudit moteur à combustion interne (1).

## Claims

1. Method for estimating the temperature (Tₑ) of the gases resulting from internal combustion in an engine (1) at the inlet to a system (12) for the post-treatment of said gases, which system is connected by a pipe (11) to an upstream system (10) for the treatment of said gases, and which is considered for calculation purposes to be a collection of n elementary reactors (Rᵢ) connected in series, of which the total number n depends on the volume of said treatment system (10) and of which the nth (Rₙ) is the last through which said gases pass before leaving said treatment system (10), **characterized in that** said temperature (Tₑ) at the inlet to said post-treatment system (12) is calculated from the temperature (Tₙ) within the nth elementary imaginary reactor (Rₙ).

2. Method according to Claim 1, **characterized in that** said temperature (Tₑ) at the inlet to said post-treatment system (12) is calculated from said temperature (Tₙ) within said nth elementary reactor (Rₙ) using a simple model of thermal convection in a tube.

3. Method according to either one of Claims 1 and 2, **characterized in that** the physical parameters of said gases (density, heat capacity, dynamic viscosity, thermal conductivity, etc.) and the physical parameters of said pipe (11) are estimated from said temperature (Tₙ) so as to determine the convective heat exchanges between said gases and said pipe (11).

4. Method according to any one of Claims 1 to 3, **characterized in that**, when the length of said pipe (11) is short enough, said temperature (Tₑ) is considered to be equal to said temperature (Tₙ).

5. Device for estimating the temperature (Tₑ) of the gases resulting from internal combustion in an engine (1) at the inlet to a system (12) for the post-treatment of said gases positioned downstream of a system (10) for the treatment of said gases, said post-treatment system (12) being connected to said treatment system (10) by means of a pipe (11), **characterized in that** it comprises the treatment means suited to application of the method according to any one of Claims 1 to 4.

6. Device according to Claim 5, **characterized in that** it is installed on the vehicle the temperature (Tₑ) of the gases resulting from internal combustion in the engine (1) and in said treatment system (10) of which is to be determined.

7. Device according to either one of Claims 5 and 6, **characterized in that** it is associated with the electronic management system (15) that manages said internal combustion engine (1).

## Patentansprüche

1. Verfahren zum Schätzen der Temperatur (Tₑ) der aus der Verbrennung eines Motors (1) stammenden Gase am Eingang eines Systems (12) für die Nachbearbeitung dieser Gase, das durch eine Leitung (11) mit einem vorgeschalteten System (10) für die Bearbeitung dieser Gase verbunden ist und rechnerisch als eine Gesamtheit aus n in Reihe miteinander verbundenen Elementarreaktoren (Rᵢ) angesehen wird, deren Gesamtanzahl n vom Volumen des Bearbeitungssystems (10) abhängig ist und wovon der n-te Reaktor (Rₙ) der letzte Reaktor ist, durch den sich die Gase bewegen, bevor sie das Bearbeitungssystem (10) verlassen, **dadurch gekennzeichnet, dass** die Temperatur (Tₑ) am Eingang des Nachbearbeitungssystems (12) anhand der Temperatur (Tₙ) im Inneren des n-ten fiktiven Elementarreaktors (Rₙ) berechnet wird.

2. Verfahren nach Anspruch 1, **dadurch gekennzeichnet, dass** die Temperatur (Tₑ) am Eingang des Nachbearbeitungssystems (12) anhand der Temperatur (Tₙ) im Inneren des n-ten Elementarreaktors (Rₙ) mittels eines einfachen Modells der Wärmekonvektion in einem Rohr berechnet wird.

3. Verfahren nach einem der Ansprüche 1 oder 2, **dadurch gekennzeichnet, dass** die physikalischen Parameter der Gase (Dichte, Wärmekapazität, dynamische Viskosität, Wärmeleitfähigkeit, ...) und die physikalischen Parameter der Leitung (11) anhand der Temperatur (Tₙ) geschätzt werden, um den jeweiligen Konvektionsaustausch zwischen den entsprechenden Gasen und der Leitung (11) zu bestimmen.

4. Verfahren nach einem der Ansprüche 1 bis 3, **dadurch gekennzeichnet, dass** dann, wenn die Länge der Leitung (11) ausreichend gering ist, die Temperatur (Tₑ) als gleich der Temperatur (Tₙ) angesehen wird.

5. Vorrichtung zum Schätzen der Temperatur (Tₑ) der aus der Verbrennung eines Motors (1) stammenden Gase am Eingang eines Systems (12) für die Nachbearbeitung der Gase, das nachgeschaltet zu einem System (10) für die Bearbeitung der Gase angeordnet ist, wobei das Nachbearbeitungssystem (12) mit dem Bearbeitungssystem (10) mittels einer Leitung (11) verbunden ist, **dadurch gekennzeichnet, dass** sie Bearbeitungsmittel enthält, die das Verfahren nach einem der Ansprüche 1 bis 4 anwenden können.

6. Vorrichtung nach Anspruch 5, **dadurch gekennzeichnet, dass** sie sich an Bord des Fahrzeugs befindet, für das die Temperatur (Tₑ) der aus der Verbrennung des Motors (1) stammenden Gase und des Bearbeitungssystems (10) gesucht ist.

7. Vorrichtung nach einem der Ansprüche 5 oder 6, **dadurch gekennzeichnet, dass** ihr ein elektronischer Rechner (15) für die Steuerung der Brennkraftmaschine (1) zugeordnet ist.
